# EUROPEAN PATENT SPECIFICATION

(11) **EP 4 576 425 B1**
(45) Date of publication and mention of the grant of the patent: **12.08.2026**
(21) Application number: 23880156.7
(22) Date of filing: 17.10.2023
(51) Int. Cl.: H01Q 1/24, H01Q 1/38, H04M 1/02, H01Q 1/44, H01Q 1/48

(54) **ANTENNA MEMBER AND ELECTRONIC DEVICE COMPRISING ANTENNA MEMBER**
ANTENNENELEMENT UND ELEKTRONISCHE VORRICHTUNG MIT DEM ANTENNENELEMENT
ÉLÉMENT D'ANTENNE ET DISPOSITIF ÉLECTRONIQUE COMPRENANT UN ÉLÉMENT D'ANTENNE

(30) Priority: 17.10.2022 KR 20220133392; 23.11.2022 KR 20220158713
(43) Date of publication of application: 25.06.2025
(73) Proprietor: Samsung Electronics Co., Ltd., Suwon-si, Gyeonggi-do 16677 (KR)
(72) Inventor: ROH, Hyunyoung, Suwon-si, Gyeonggi-do 16677 (KR); PARK, Hongchul, Suwon-si, Gyeonggi-do 16677 (KR)
(74) Representative: Gulde & Partner
(86) International application number: PCT/KR2023/015988
(87) International publication number: WO 2024/085579

(56) References cited:
- KR-A- 20200 026 000
- KR-A- 20220 046 990
- KR-A- 20220 076 257
- KR-A- 20220 077 579
- KR-A- 20220 112 037
- US-A1- 2013 257 659
- US-A1- 2022 085 488

## Description

### [Technical Field]

Various embodiments disclosed herein relate to an antenna member and an electronic device including the same.

### [Background Art]

Due to the design trend of electronic devices, demand for electronic devices with a metal for appearance is increasing.

In the case of an electronic device having a frame made of metal as an exterior, disposing an antenna inside the frame may be limited. In order to overcome this, a method of implementing an antenna and securing radiation performance by utilizing at least a portion of a metal frame as a radiator of the antenna has been applied.

Meanwhile, as 5G service starts, additional service bands may be added. For this reason, electronic devices include a larger number of antenna radiators than before. In similar regards, publication US2022085488A1 relates to an electronic device having multiple co-existing antennas implemented using a flexible printed circuit and publication KR20200026000A relates toa portable electronic device with a segmented conductive housing structure in which adjacent conductive housing segments are mechanically joined by one or more non-conductive coupling portions that electrically isolate the segments.

### [Disclosure of Invention]

### [Technical Problem]

An electronic device may be provided with an antenna configured to transmit or receive a signal to or from an external electronic device. As the electronic device is downsized, a space for arranging an antenna inside the electronic device may be decreased. In an embodiment, an electronic device having a metal frame as an exterior may utilize the frame as an antenna. In this case, it is necessary to electrically connect a communication module disposed on a printed circuit board to the frame. The communication module and the frame may be electrically connected via an Flexible printed circuit board. At least a portion of the printed circuit board may be disposed vertically in the housing so as to be disposed in a narrow space of the housing to face the frame.

Meanwhile, when the Flexible printed circuit board is directly disposed on the frame, damage may occur during assembling the Flexible printed circuit board to the frame. For example, when the Flexible printed circuit board is fixed to the frame with screws, the frame may be twisted.

### [Solution to Problem]

An electronic device is provided corresponding to the appended claims. The electronic device according to an embodiment includes a housing, a support plate seated in the housing, a first support protruding from the support plate in a first direction, a second support disposed to face an extension surface including the first support and located on the support plate, a third support protruding from the second support in a second direction perpendicular to the first direction, and an Flexible printed circuit board including a first part, at least a portion of which is inserted into a space between the first support and the second support to be seated on the second support and is supported via the third support, and a second part extending from the first part to be seated on the support plate.

In accordance with an aspect of the disclosure, an electronic device is provided corresponding to the appended claims. The electronic device includes a housing, a support plate comprising a body, a first support substantially protruding from the body in a first direction, and a second support spaced apart from the first support and substantially protruding from the body in the first direction, the support plate disposed in the housing, and a flexible printed circuit board comprising a first part, at least a portion of which is disposed between the first support and the second support, and a second part extending from the first part disposed on the body of the support plate such that the first part is vertically disposed with respect to the second part, wherein at least one first conductive member is disposed at the first part, and at least one second conductive member is disposed at the second part.

### [Advantageous Effects of Invention]

According to an embodiment of the disclosure, it is possible to present a structure that allows a Flexible printed circuit board configured to connect a frame to a communication module in a narrow space of a housing to be vertically seated in the housing.

In addition, it is possible to present a structure for mitigating a phenomenon in which damage occurs during a process of assembling the Flexible printed circuit board to the housing.

### [Brief Description of Drawings]

In connection with the description of the drawings, the same or similar components may be denoted by the same or similar reference numerals.
FIG. 1 is a block diagram of an electronic device according to various embodiments in a network environment.
FIG. 2A is a front perspective view of an electronic device according to an embodiment disclosed herein.
FIG. 2B is a rear perspective view illustrating the electronic device of FIG. 2A, according to an embodiment disclosed herein.
FIG. 3 is an exploded perspective view of the electronic device of FIG. 2A, according to an embodiment disclosed herein.
FIG. 4 is an exploded perspective view of an antenna structure according to an embodiment disclosed herein.
FIG. 5A is a view illustrating a Flexible printed circuit board according to an embodiment disclosed herein.
FIG. 5B is a perspective view of a support plate on which a speaker module is seated, according to an embodiment disclosed herein.
FIG. 5C is a diagram showing a state in which the fourth support shown in FIG. 5B is removed from the support plate and the second support extends to a portion of the area where the fourth support was located.
FIG. 5D is a view explaining an embodiment in which the first support shown in FIG. 5B is removed from the support plate.
FIGS. 6A and 6B are views for explaining a process of assembling an Flexible printed circuit board to a support plate according to an embodiment disclosed herein.
FIGS. 7A to 7C are views of a support plate to which an Flexible printed circuit board is assembled according to an embodiment disclosed herein.
FIG. 8A is a cross-sectional view of the support plate of FIG. 7A taken along line A-A.
FIG. 8B is a cross-sectional view of the support plate of FIG. 7A taken along line B-B.
FIG. 8C is a cross-sectional view of the support plate of FIG. 7A taken along line C-C.
FIG. 9 is a view illustrating a state in which the support plate of FIG. 7A is assembled to a housing.
FIG. 10 is a view for explaining the antenna performance of an antenna structure according to an embodiment of the disclosure.

### [Mode for the Invention]

It should be appreciated that various embodiments of the present disclosure and the terms used therein are not intended to limit the technological features set forth herein to particular embodiments and include various changes or replacements for a corresponding embodiment within the scope of the appended claims.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

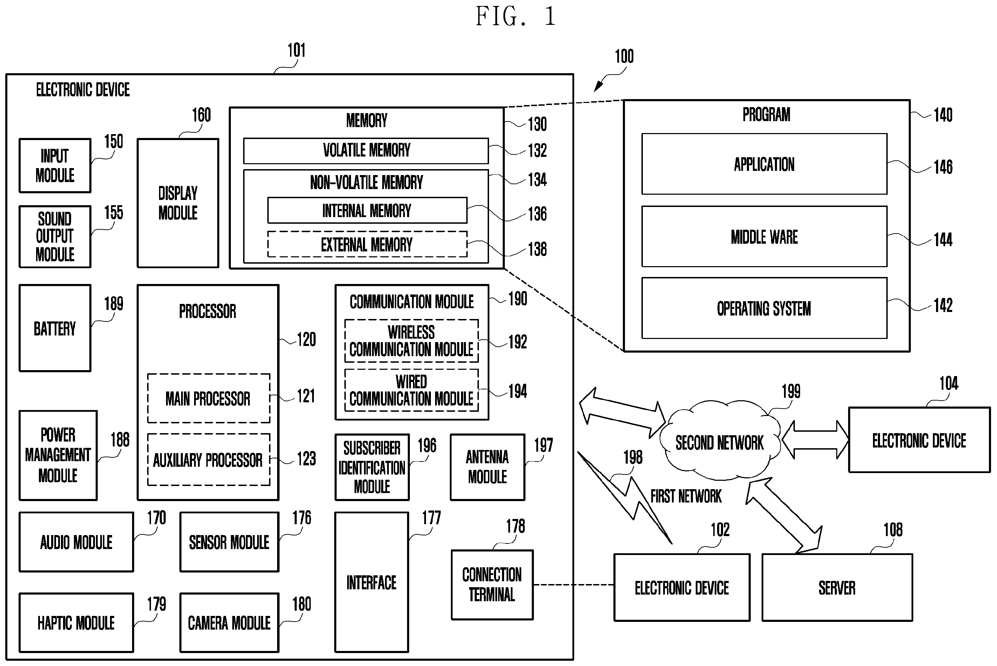

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

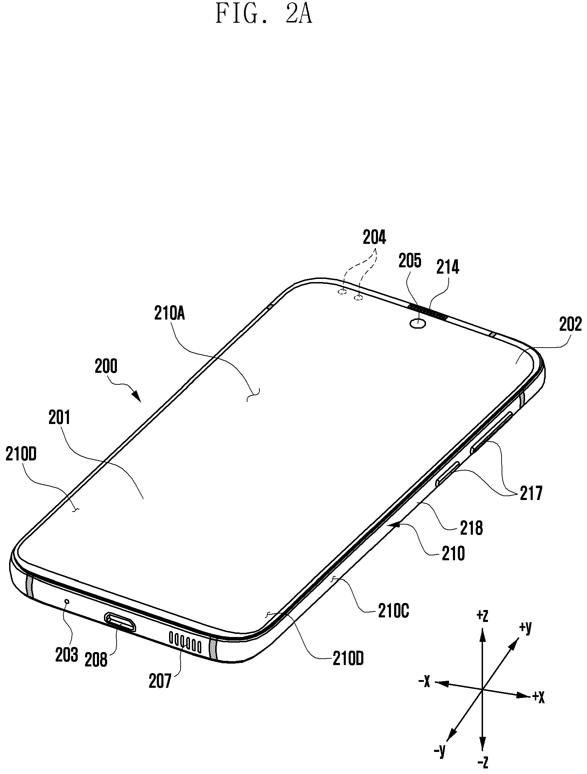

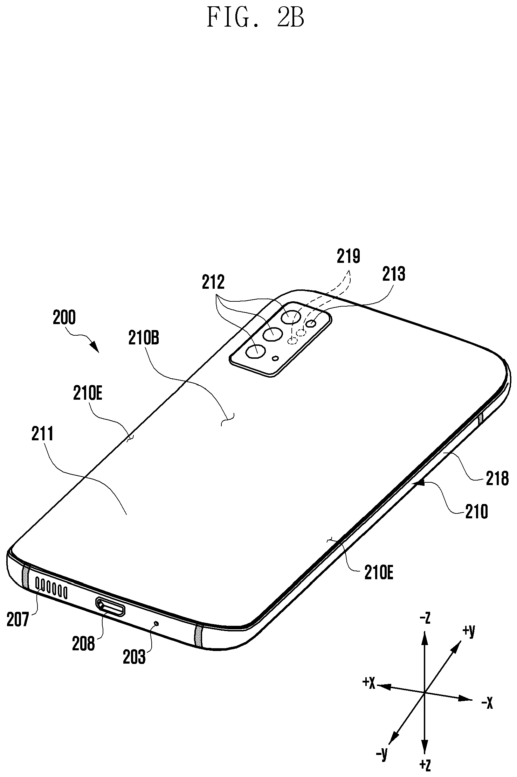

FIG. 2A is a front perspective view of an electronic device according to various embodiments of the disclosure. FIG. 2B is a rear perspective view of the electronic device of FIG. 2A according to various embodiments of the disclosure.

The electronic device 200 to be described below may include at least one of the components of the electronic device 101 described above with reference to FIG. 1.

With reference to FIG. 2A and FIG. 2B, the electronic device 200 according to an embodiment may include a housing 210 that includes a first surface (or front surface) 210A, a second surface (or rear surface) 210B, and a side surface 210C surrounding a space between the first surface 210A and the second surface 210B. In another embodiment (not shown), the housing 210 may refer to a structure forming a part of the first surface 210A, the second surface 210B, and the side surface 210C in FIG. 2A. According to an embodiment, the first surface 210A may be formed by a front plate 202 (e.g., glass plate or polymer plate including various coating layers) whose at least a portion is substantially transparent. The second surface 210B may be formed by a rear plate 211 that is substantially opaque. The rear plate 211 may be formed by, for example, coated or tinted glass, ceramic, polymer, metal (e.g., aluminum, stainless steel (STS), or magnesium), or a combination of at least two thereof. The side surface 210C may be formed by a side bezel structure (or "side member") 218 coupled to the front plate 202 and the rear plate 211 and including a metal and/or a polymer. In a certain embodiment, the rear plate 211 and side bezel structure 218 may be integrally formed and include the same material (e.g., metal material such as aluminum).

In the illustrated embodiment, the front plate 202 may include a first region 210D that is curved and seamlessly extended from the first surface 210A toward the rear plate at opposite ends of the longer edge of the front plate 202. In the illustrated embodiment (see FIG. 2B), the rear plate 211 may include a second region 210E that is curved and seamlessly extended from the second surface 210B toward the front plate 202 respectively at opposite ends of the longer edge. In a certain embodiment, the front plate 202 or the rear plate 211 may include only one of the first region 210D and the second region 210E. In a certain embodiment, the front plate 202 may not include the first region and the second region, but may include only a flat surface disposed parallel to the second surface 210B. In the above embodiments, when the electronic device is viewed from the side thereof, the side bezel structure 218 may have a first thickness (or width) on a side where the first region 210D or the second region 210E is not included, and may have a second thickness thinner than the first thickness on a side where the first region 210D or the second region 210E is included.

According to an embodiment, the electronic device 200 may include at least one or more of display 201, input device 203, sound output devices 207 and 214, sensor modules 204 and 219, camera modules 205 and 212, key input device 217, indicator (not shown), or connector 208. In a certain embodiment, at least one of the elements (e.g., key input device 217 or indicator) may be omitted from the electronic device 200, or another element may be added to the electronic device 200.

The display 201 may be exposed, for example, through a significant portion of the front plate 202. In a certain embodiment, at least a portion of the display 201 may be exposed through the front plate 202 forming the first surface 210A and the first region 210D of the side surface 210C. The display 201 may be coupled to or disposed adjacent to a touch sensing circuit, a pressure sensor capable of measuring the intensity (pressure) of a touch, and/or a digitizer that detects a magnetic field type stylus pen. In a certain embodiment, at least some of the sensor modules 204 and 219, and/or at least some of the key input devices 217 may be disposed on the first region 210D and/or the second region 210E.

The input device 203 may include a microphone 203. In a certain embodiment, the input device 203 may include a plurality of microphones 203 arranged to detect the direction of a sound. The sound output devices 207 and 214 may include speakers 207 and 214. The speakers 207 and 214 may include an external speaker 207 and a call receiver 214. In a certain embodiment, the microphone 203, the speakers 207 and 214, and the connector 208 may be at least partially disposed in the internal space of the electronic device 200, and may be exposed to the external environment through at least one hole formed in the housing 210. In a certain embodiment, the hole formed in the housing 210 may be commonly used for the microphone 203 and the speakers 207 and 214. In a certain embodiment, the sound output devices 207 and 214 may include a speaker (e.g., piezo speaker) that operates in isolation from the hole formed in the housing 210.

The sensor modules 204 and 219 may generate an electrical signal or a data value corresponding to an internal operating state of the electronic device 200 or an external environmental state. The sensor modules 204 and 219 may include, for example, a first sensor module 204 (e.g., proximity sensor) and/or a second sensor module (not shown) (e.g., fingerprint sensor) disposed on the first surface 210A of the housing 210, and/or a third sensor module 219 (e.g., HRM sensor) disposed on the second surface 210B of the housing 210. The fingerprint sensor may be disposed on the first surface 210A (e.g., home key button) of the housing 210, on a portion of the second surface 210B, and/or under the display 201. The electronic device 200 may further include a sensor module which is not shown, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, a proximity sensor, or an illuminance sensor.

The camera modules 205 and 212 may include a first camera module 205 disposed on the first surface 210A of the electronic device 200, a second camera module 212 disposed on the second surface 210B, and/or a flash 213. The camera modules 205 and 212 may include one or plural lenses, an image sensor, and/or an image signal processor. The flash 213 may include, for example, a light emitting diode or a xenon lamp. In a certain embodiment, two or more lenses (wide-angle lens, ultra-wide-angle lens, or telephoto lens) and image sensors may be arranged in one surface of the electronic device 200.

The key input devices 217 may be arranged in the side surface 210C of the housing 210. In another embodiment, the electronic device 200 may not include some or all of the above-mentioned key input devices 217, and a key input device 217 not included may be implemented on the display 201 in a different form such as a soft key. In another embodiment, the key input devices 217 may be implemented using a pressure sensor included in the display 201.

The indicator may be disposed on, for example, the first surface 210A of the housing 210. The indicator may provide, for example, state information of the electronic device 200 in a light form (e.g., light emitting element). In another embodiment, the light emitting element may provide a light source interacting with, for example, the operation of the camera module 205. The indicator may include, for example, an LED, an IR LED, and/or a xenon lamp.

The connector holes 208 may include a first connector hole 208 capable of accepting a connector (e.g., universal serial bus (USB) connector) for transmitting and receiving power and/or data to and from an external electronic device, and/or a second connector hole (e.g., earphone jack) (not shown) capable of accepting a connector for transmitting and receiving an audio signal to and from an external electronic device.

Some of the camera modules 205 and 212, some of the sensor modules 204 and 219, or the indicator may be disposed to be exposed through the display 201. For example, the camera module 205, the sensor module 204, or the indicator may be arranged in the internal space of the electronic device 200 so as to be in contact with the external environment through an opening of the display 201 perforated up to the front plate 202 or a transmissive region. According to an embodiment, the region in which the display 201 and the camera module 205 face each other may be formed as a transmissive region having a preset transmittance as a part of the content display area. According to an embodiment, the transmissive region may be formed to have a transmittance in a range of about 5 percent to about 20 percent. This transmissive region may include a region overlapping an effective area (e.g., angle-of-view area) of the camera module 205 through which light passes for image generation with an image formed by an image sensor. For example, the transmissive region of the display 201 may include a region having a lower pixel density than surrounding regions. For example, the transmissive region may replace the opening. For example, the camera module 205 may include an under display camera (UDC). **In** another embodiment, a certain sensor module 204 may be disposed in the internal space of the electronic device so as to perform its function without being visually exposed through the front plate 202. For example, in this case, the region of the display 201 facing the sensor module may not need a perforated opening.

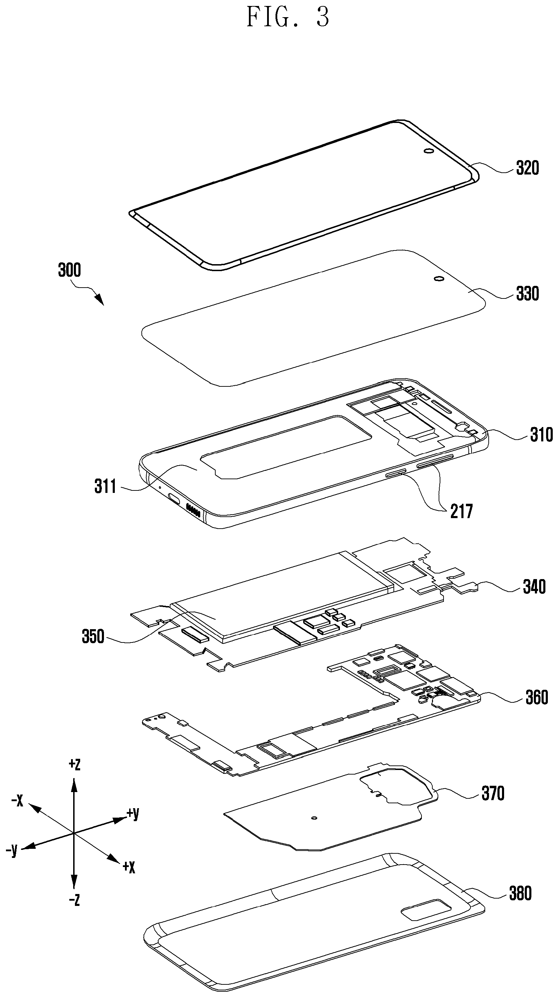

According to various embodiments, the electronic device 200 has a bar-type or plate-type appearance, but the present invention is not limited thereto. For example, the illustrated electronic device 200 may be part of a foldable electronic device, a slidable electronic device, a stretchable electronic device, and/or a rollable electronic device. "foldable electronic device", "slidable electronic device", "stretchable electronic device" and/or "rollable electronic device" This means that the display (eg, the display 330 of FIG. 3) can be bent, so that at least a portion thereof is folded, rolled or rolled, at least partially expanded in area, and/or housing. (eg; the housing 210 of FIGS. 2A and 2B) may refer to an electronic device that can be accommodated inside. Foldable electronic devices, slideable electronic devices, stretchable electronic devices, and/or rollable electronic devices expand the screen display area by unfolding the display or exposing a larger area of the display to the outside according to the user's needs. can be used

FIG. 3 is an exploded perspective view of the electronic device 200 of FIG. 2A according to various embodiments of the disclosure.

The electronic device 300 of FIG. 3 may be at least partially similar to the electronic device 200 of FIGS. 2A and 2B, or may include other embodiments of an electronic device.

With reference to FIG. 3, the electronic device 300 (e.g., electronic device 200 in FIG. 2A or 2B) may include a side member 310 (e.g., side bezel structure), a first support member 311 (e.g., bracket or support structure), a front plate 320 (e.g., front cover), a display 330 (e.g., display 201 in FIG. 2A), a board 340 (e.g., printed circuit board (PCB), flexible PCB (FPCB), or rigid-flexible PCB (RFPCB)), a battery 350, a second support member 360 (e.g., rear case), an antenna 370, and a rear plate 380 (e.g., rear cover). In a certain embodiment, at least one of the components (e.g., first support member 311 or second support member 360) may be omitted from the electronic device 300 or other components may be additionally included therein. At least one of the components of the electronic device 300 may be the same as or similar to at least one of the components of the electronic device 200 of FIG. 2A or 2B, and repeated descriptions will be omitted below.

The first support member 311 may be disposed inside the electronic device 300 and may be connected to the side member 310 or may be integrally formed with the side member 310. The first support member 311 may be made of, for example, a metal material and/or a non-metal (e.g., polymer) material. The first support member 311 may have one surface coupled to the display 330 and the other surface coupled to the board 340. A processor, a memory, and/or an interface may be mounted on the board 340. The processor may include, for example, one or more of a central processing unit, an application processor, a graphics processing unit, an image signal processor, a sensor hub processor, and a communication processor.

The memory may include, for example, a volatile memory or a non-volatile memory.

The interface may include, for example, a high definition multimedia interface (HDMI), a universal serial bus (USB) interface, an SD card interface, and/or an audio interface. The interface may, for example, electrically or physically connect the electronic device 300 to an external electronic device, and may include a USB connector, an SD card/MMC connector, or an audio connector.

The battery 350 is a device for supplying power to at least one component of the electronic device 300, and may include, for example, a non-rechargeable primary cell, a rechargeable secondary cell, or a fuel cell. At least a portion of the battery 350 may be disposed substantially coplanar with the board 340, for example. The battery 350 may be integrally disposed inside the electronic device 300. In another embodiment, the battery 350 may be disposed attachably and detachably with the electronic device 300.

The antenna 370 may be disposed between the rear plate 380 and the battery 350. The antenna 370 may include, for example, a near field communication (NFC) antenna, a wireless charging antenna, and/or a magnetic secure transmission (MST) antenna. The antenna 370 may, for example, perform short-range communication with an external device or wirelessly transmit and receive power required for charging. In another embodiment, an antenna structure may be formed by a part of the side bezel structure 310 and/or the first support member 311 or a combination thereof.

Although the electronic device 300 described above has been described with reference to a bar-type electronic device, in some embodiments, the electronic device 300 may be a portion of a foldable electronic device, a slidable electronic device, a stretchable electronic device, and/or a rollable electronic device.

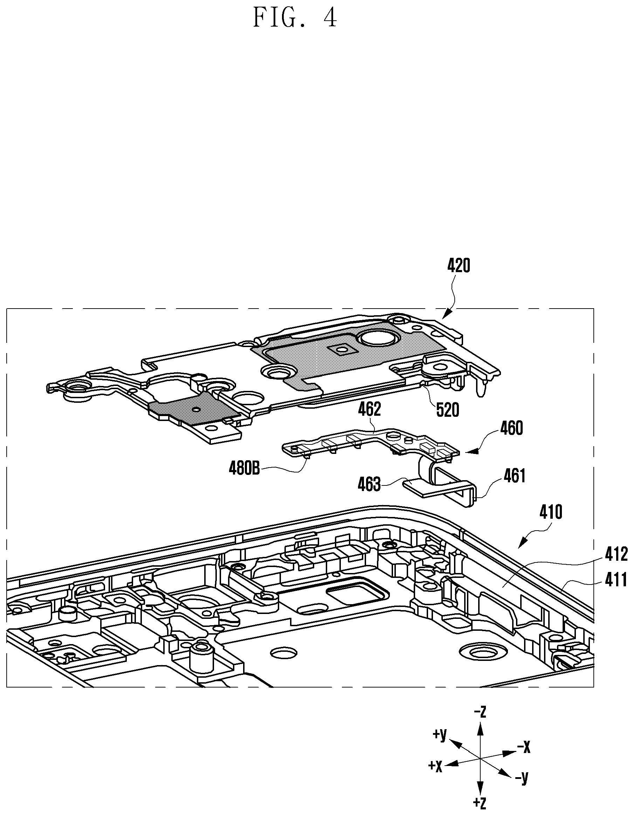

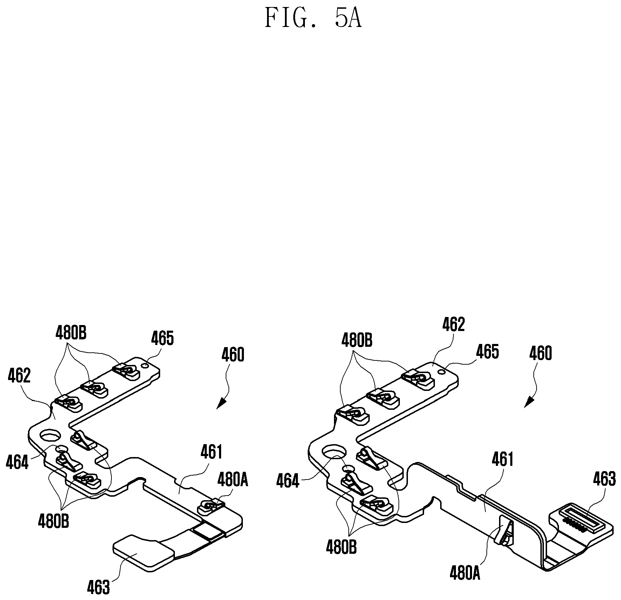

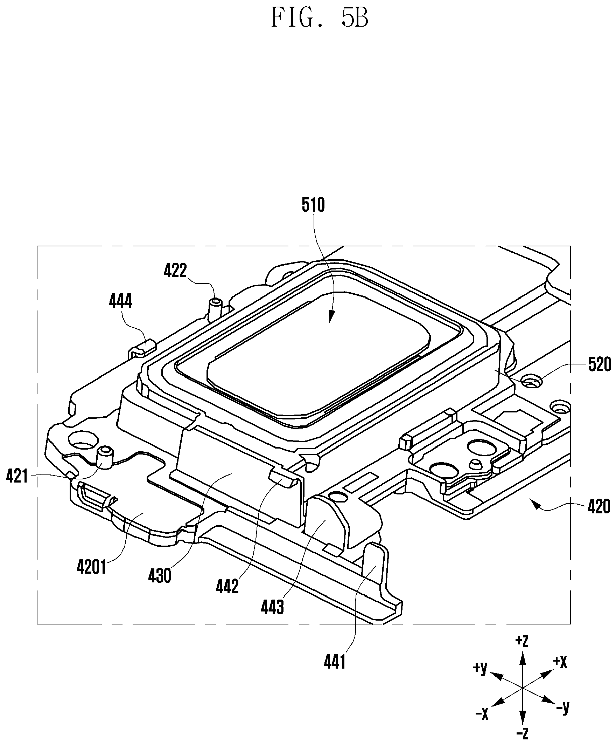

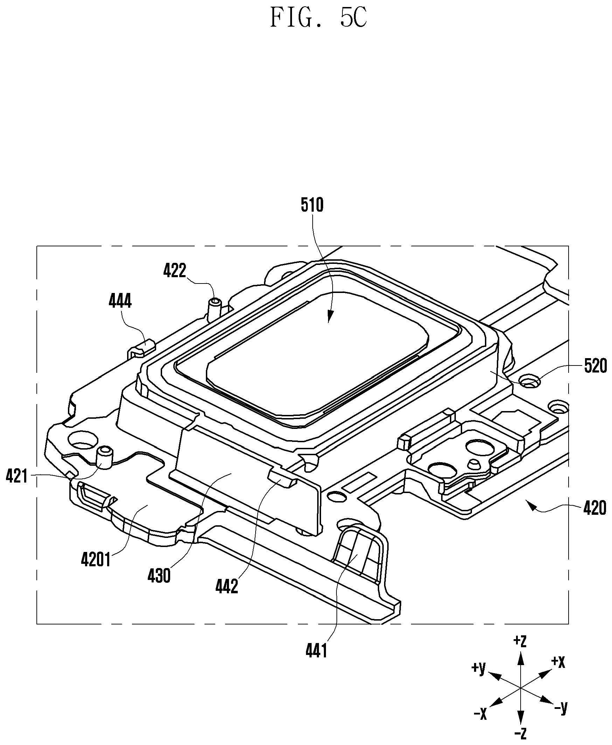

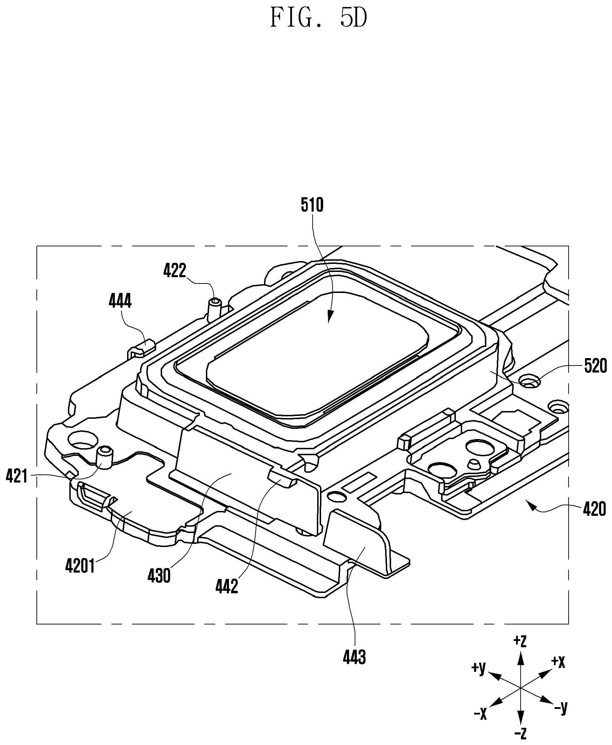

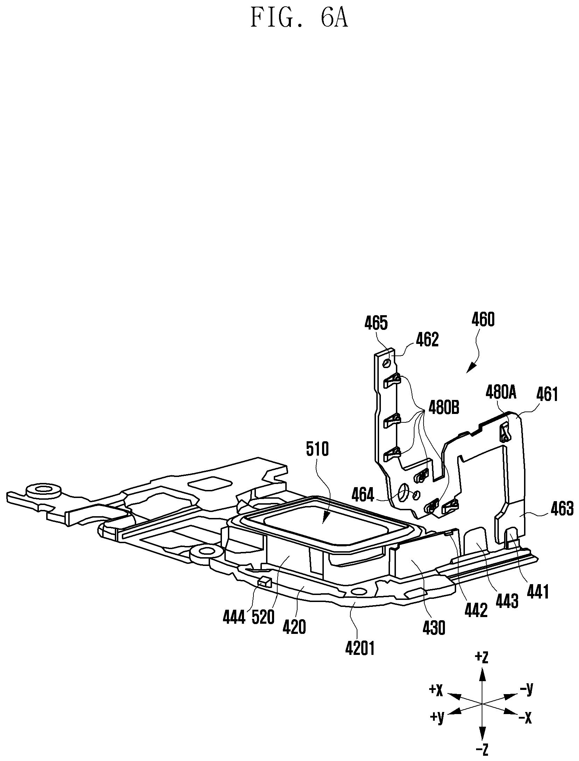

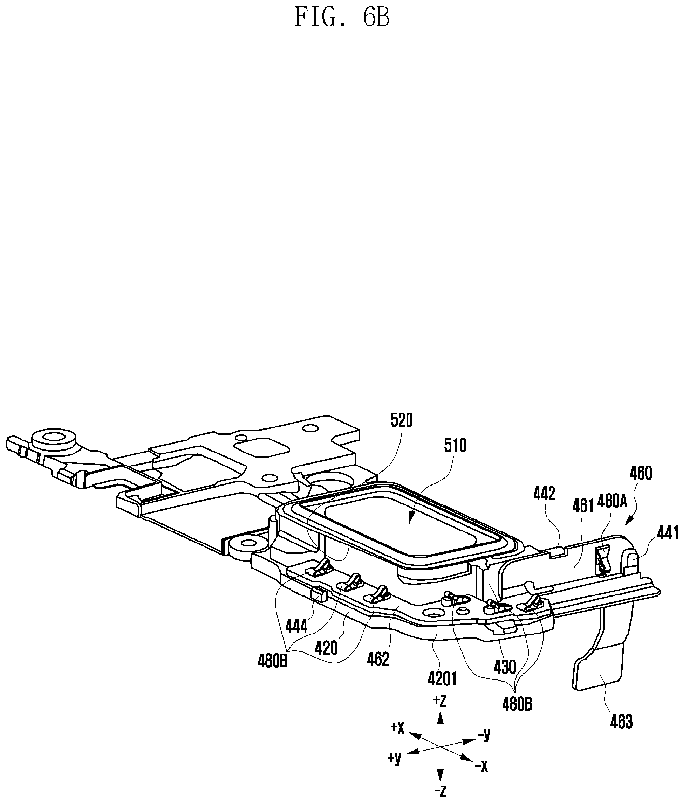

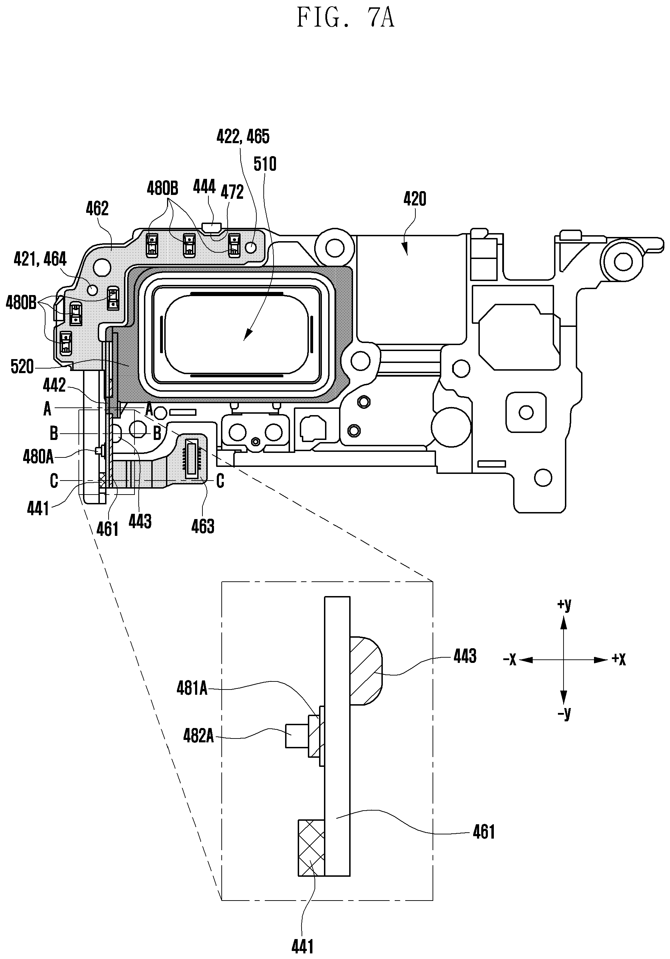

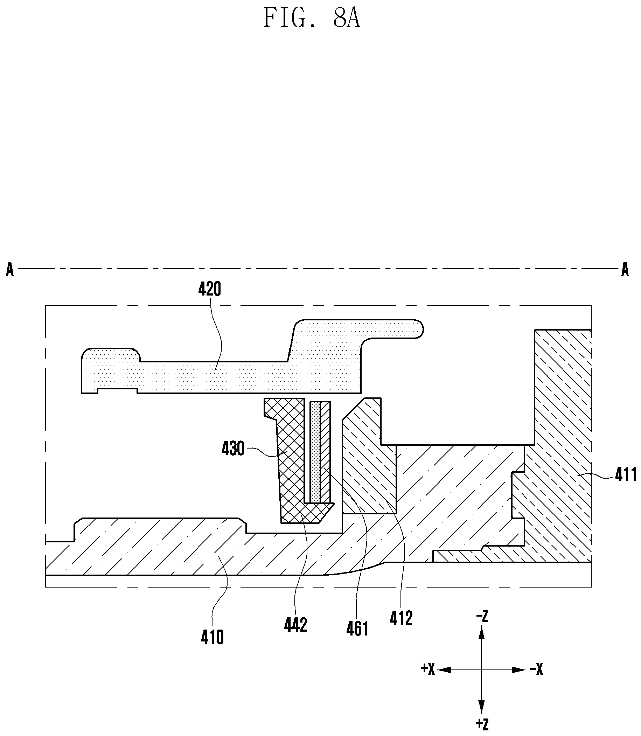

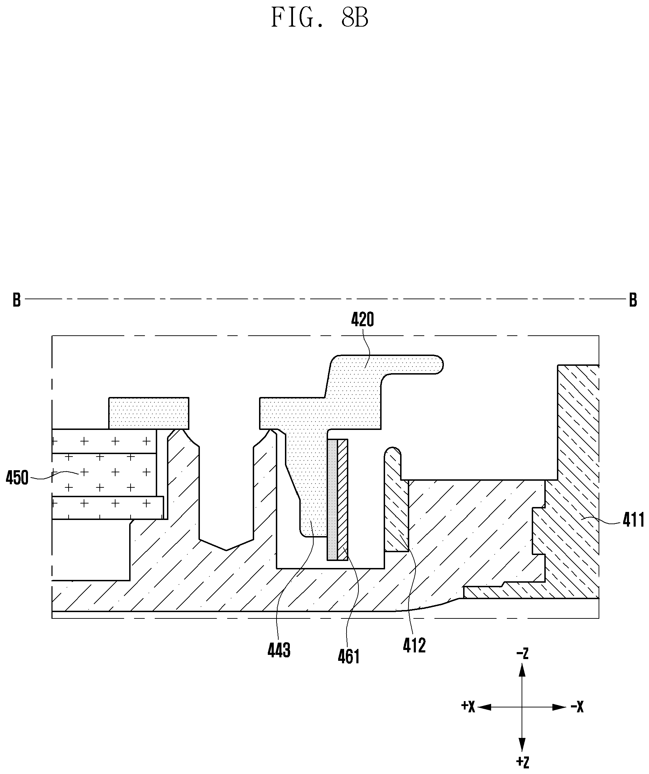

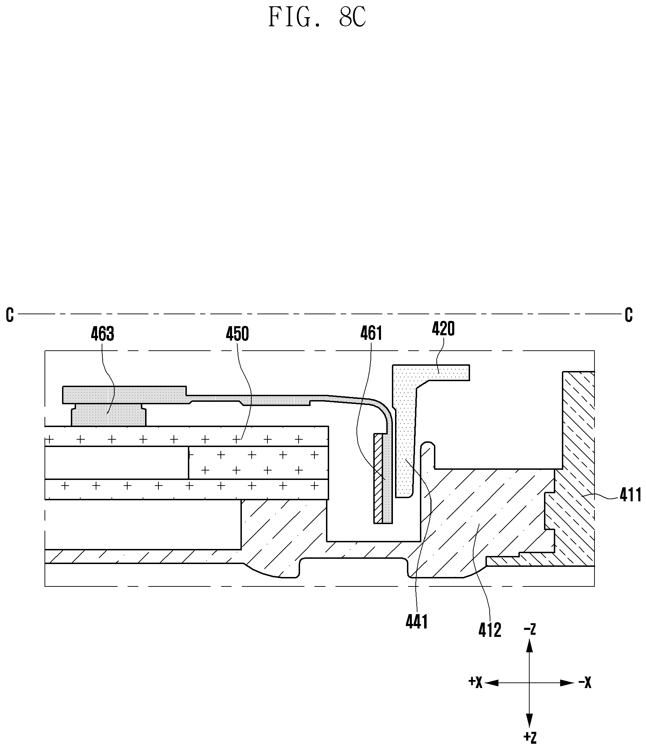

FIG. 4 is an exploded perspective view of an antenna structure according to an embodiment disclosed herein. FIG. 5A is a view illustrating a Flexible printed circuit board according to an embodiment disclosed herein. FIG. 5B is a perspective view of a support plate on which a speaker module is seated, according to an embodiment disclosed herein. FIG. 5C is a diagram showing a state in which the fourth support shown in FIG. 5B is removed from the support plate and the second support extends to a portion of the area where the fourth support was located. FIG. 5D is a view explaining an embodiment in which the first support shown in FIG. 5B is removed from the support plate. FIGS. 6A and 6B are views for explaining a process of assembling an Flexible printed circuit board to a support plate according to an embodiment disclosed herein. FIGS. 7A to 7c are views of a support plate to which an Flexible printed circuit board is assembled according to an embodiment disclosed herein. FIG. 8A is a cross-sectional view of the support plate of FIG. 7A taken along line A-A. FIG. 8B is a cross-sectional view of the support plate of FIG. 7A taken along line B-B. FIG. 8C is a cross-sectional view of the support plate of FIG. 7A taken along line C-C.

According to an embodiment of the disclosure, as illustrated in FIG. 4, the electronic device 300 may include a housing 410, an flexible printed circuit board 460, and a support plate 420. In an embodiment, the housing 410 may be a fixture in which the flexible printed circuit board 460, the support plate 420, and electronic components are placed. In an embodiment, the flexible printed circuit board 460 may be a RF (radio frequency) member that connects the frame 411 and the printed circuit board 450 (eg, the board in FIG. 3) on which the communication module is disposed. In an embodiment, the support plate 420 may be a rear plate facing the rear of the electronic device.

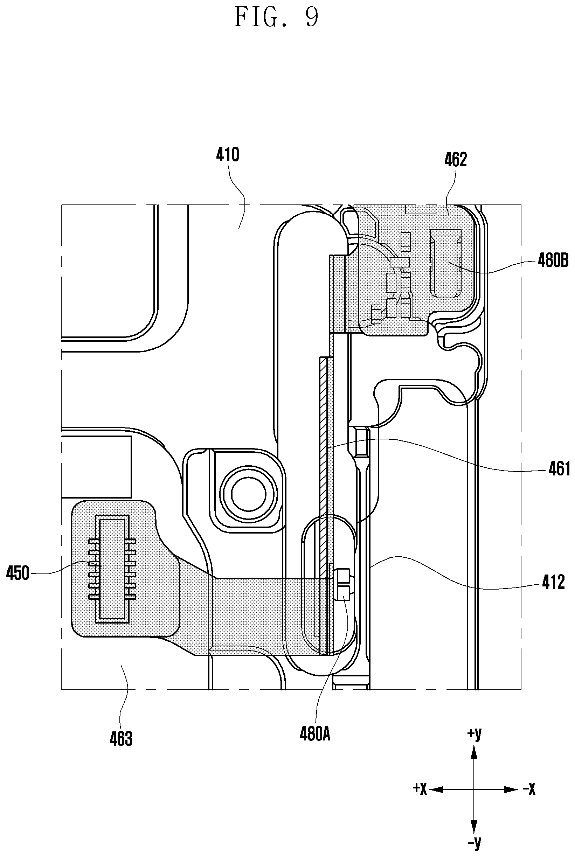

In an embodiment, as illustrated in FIG. 4, the electronic device 300 may be disposed in the order of the housing 410 - the flexible printed circuit board 460 - the support plate 420 (e.g., the third support member 360 in FIG. 3). Referring to FIG. 7A to be described later, the flexible printed circuit board 460 may be fixed to the support plate 420 and disposed in the housing 410. Referring to FIG. 9 to be described later, the support plate 420 to which the flexible printed circuit board 460 is coupled may be seated in the housing 410 in the +z direction with reference to FIG. 4.

According to an embodiment, as illustrated in FIG. 4, the electronic device 300 (e.g., the electronic device 101 in FIG. 1 or the electronic device 200 in FIG. 2A or FIG. 2B) may include a frame 411 (e.g., the side surface bezel structure 218 in FIG. 2A or the side surface member 310 in FIG. 3). The frame 411 may define a side exterior of the electronic device 300. For example, the side exterior of the electronic device 300 may mean the surface excluding the front surface (e.g., the surface oriented in the +z direction in FIG. 4) and the rear surface (e.g., the surface oriented in the -z direction in FIG. 4) of the electronic device 300. In an embodiment, the frame 411 may include an inner wall 412 facing the inner space of the electronic device 300.

According to an embodiment, the frame 411 may be made of a conductive material and used as an antenna of the electronic device 300. For example, the frame 411 may be made of a metal material including aluminum (Al). This is merely an example, and the frame 411 may be made of various metal materials. The frame 411 may be electrically connected to a communication module (e.g., the communication module 180 in FIG. 1) connected to a printed circuit board 450 (e.g., the board 340 in FIG. 3) of the electronic device 300and may transmit or receive a communication signal (e.g., RF signal) to or from an external device. In an embodiment, the frame 411 may be electrically connected to the communication module via an flexible printed circuit board 460. For example, the flexible printed circuit board 460 may include a first conductive member 480A and a second conductive member 480B. With at least one of the first conductive member 480A and the second conductive member 480B in contact with the frame 411, the connection part 463 of the flexible printed circuit board 460 is electrically connected to the printed circuit board 450. As connected, the frame 411 may be electrically connected to the communication module through the flexible printed circuit board 460. In an embodiment, the flexible printed circuit board 460 may electrically connect the communication module to the inner wall 412 of the frame 411. Here, the Flexible printed circuit board 460 may be a component that transmits a radio frequency (RF) signal. The Flexible printed circuit board 460 may transmit an RF signal processed by the communication module of the electronic device 300 to the frame 411 serving as an antenna, or may transmit an RF signal received by the frame 411 to the communication module.

According to an embodiment, the frame 411 may be physically split by split portions (not illustrated). As an insulating member made of a material having low conductivity or low permittivity is disposed in the split portion, the frame may be electrically split. In an embodiment, when the frame 411 is used as an antenna of the electronic device 300, an antenna resonance frequency may be determined depending on the physical length of the frame 411. For example, as described above, the frame 411 may be split into multiple portions having different lengths. In this case, the split frames 411 may have different resonance frequencies. When the frames 411 having different resonance frequencies are used, communications in various frequency bands (e.g., short-range communication and long-range communication) may be possible.

In an embodiment, the Flexible printed circuit board 460 may include a flexible printed circuit board radio frequency cable (FRC). The Flexible printed circuit board 460 may be made of a flexible material and may include multiple conductive lines. In an embodiment, the conductive lines may include, for example, a signal line through which an RF signal is transmitted, a power line through which power for driving a circuit is transmitted, and a ground line which is connected to a ground. In an embodiment, the Flexible printed circuit board 460 may include a structure in which multiple layers are stacked. In some embodiments, a ground vertical interconnect access (VIA) may be disposed around the conductive lines. Here, the ground VIA may electrically connect, in a stacking direction, grounds disposed in different layers in the Flexible printed circuit board 460 in which the multiple layers are stacked. For example, a ground disposed on the same layer as a conductive line may be disposed around a conductive lines, and a ground disposed on a different layer from the conductive line may be disposed at a position overlapping the conductive line. Grounds arranged on different layers may be interconnected by using a VIA. The ground VIA structure may be configured to reduce a phenomenon in which noise is added to an RF signal transmitted via a conductive line by blocking electromagnetic waves generated by another electrical object.

According to an embodiment, as illustrated in FIG. 5A, the flexible printed circuit board 460 may include a first part 461, a second part 462, and a connection part 463. In an embodiment, the first part 461 may be seated on a second support 430 disposed on the support plate 420 to be described later. The first part 461 may be fixed to the support plate 420 via supports 441, 442, and 443 provided on the support plate 420. In an embodiment, the first part 461 may be fixed to the second support 430 via an adhesive member. In an embodiment, the first part 461 may be fixed to the second support 430 of the support plate 420 via an adhesive member. In an embodiment the second part 462 may be seated on a body 4201 of the support plate 420 and fixed via an adhesive member.

In an embodiment, in the flexible printed circuit board 460, the first part 461, the second part 462, and the connection part 463, which are partially made of a bendable material, may be folded with respect to each other. In an embodiment, referring to FIG. 5A, the first part 461 of the flexible printed circuit board 460 may be bent to be perpendicular to the second part 462. In addition, the connection part 463 may be bent to be perpendicular to the first part 461. The above-described structure is merely an example, and in addition, the flexible printed circuit board 460 may be bent in various ways based on the space in which it is disposed. In an embodiment, the first part 461 may be configured with a flexible printed circuit board (FPCB), a portion of which is made of a bendable material, and the second part 462 may be configured with an unbendable printed circuit board (PCB).

According to an embodiment, the connection part 463 may electrically connect the flexible printed circuit board 460 to the printed circuit board 450 of the electronic device 300. In an embodiment, the connection part 463 may be configured integrally with the flexible printed circuit board 460. In this case, the connection part 463 may be understood as a portion of the flexible printed circuit board 460. In another embodiment, the connection part 463 may be fabricated separately from the flexible printed circuit board 460 and electrically connected to the flexible printed circuit board 460.

In an embodiment, the connection part 463 may be connected to the printed circuit board 450 of the electronic device by an electrical connection method such as a soldering method, a clip method, a socket method, a bolt method, and/or a bonding method. The connection part 463 may electrically connect the printed circuit board 450 of the electronic device 300 to the Flexible printed circuit board 460 such that the communication module disposed on the printed circuit board 450 and the flexible printed circuit board 460 can be electrically connected to each other. Accordingly, the communication module disposed on the printed circuit board 450 and the frame 411 may be electrically connected to each other via the flexible printed circuit board 460.

According to an embodiment, the flexible printed circuit board 460 may include an additional antenna. The additional antenna may be made of a conductive material and electrically connected to the flexible printed circuit board 460. The additional antenna may transmit or receive RF signals of a high-frequency band (e.g., 3.5 GHz to 28 GHz, or 28 GHz to 100 GHz (mmWave)).

According to an embodiment, as illustrated in FIG. 4, the frame 411 may include an inner wall 412 facing the inner space of the electronic device 300. As will be described later, the first part 461 of the flexible printed circuit board 460 may be disposed perpendicular to the support plate 420 to face the inner wall 412 of the frame 411. For example, the first part 461 of the flexible printed circuit board 460 may be seated on the second support 430 of the support plate 420. Referring to FIG. 5A, the second support 430 may be disposed perpendicular to the body 4201 of the support plate 420. The support plate 420 may be vertically assembled to the housing 410 such that the second support 430 faces the inner wall 412 of the frame 411. In this case, the first part 461 of the flexible printed circuit board 460 may be seated on the second support 430 to face the inner wall 412 of the frame 411. Accordingly, since at least a portion of the flexible printed circuit board 460 is seated on the second support 430 and vertically disposed in the housing 410, the space occupied by the flexible printed circuit board 460 within the housing 410 may be reduced. Accordingly, additional electronic components or devices constituting the electronic device 300 may be disposed in the reduced space.

According to an embodiment, as illustrated in FIG. 5B, the support plate 420 may include a first support 441, a second support 430, a third support 442, a fourth support 443, and/or a fifth support 444. In an embodiment, the first support 441 may be a portion that protrudes from the body(4201) of the support plate 420 in the susbstantiallyfirst direction. The first direction may be a direction perpendicular to the support plate 420. For example, the first direction may be the +z direction from the support plate 420 with reference to FIG. 5B. In an embodiment, the second support 430 may be a portion that substantially protrudes from the body 4201 of the support plate 420 in the first direction. In an embodiment, the second support 430 may be spaced apart from the first support 441. In an embodiment, the second support 430 may be disposed to face an extension surface (an imaginary surface) (e.g., the surface extending in the Y-axis direction with reference to FIG. 5B) including the first support 441 and may support the first part 461 of the flexible printed circuit board 460. In an embodiment, the second support 430 may be configured integrally with the support plate 420. In some embodiments, the second support 430 may be a portion of a speaker housing 520 seated on the support plate 420. Referring to FIG. 5B, the second support 430 may be disposed on the support plate 420 to face the extension surface including the first support 441 and may be located in an oblique direction with respect to the first support 441. In an embodiment, the third support 442 may be a portion protruding from the second support 430 in a second direction. The second direction may be a direction perpendicular to the first direction. For example, the second direction may be the -x direction with reference to FIG. 5B. In an embodiment, the third support 442 may support the first part 461 of the Flexible printed circuit board 460. For example, the third support 442 may determine the position of the first part 461 of the Flexible printed circuit board 460 seated on the support plate 420 in the z-axis direction. In an embodiment, the fourth support 443 may be portion that substantially protrude from the body 4201 of the support plate 420 in the first direction. In an embodiment, the fourth support 443 may be disposed on the body 4201 of the support plate 420 to face the extension surface including the first support 441. Referring to FIG. 5B, the fourth support 443 may be disposed on the support plate 420 to face the extension surface including the first support 441 and may be located in an oblique direction with respect to the first support 441. In an embodiment, the fourth support 443 may be formed integrally with the second support 430. In an embodiment, the fourth support 443 may be disposed on the same plane as the second support 430, but is not limited thereto.

The above-described first support 441, third support 442, fourth support 443, and fifth support 444 are merely examples, and at least one support may be omitted from or added to the support plate 420.

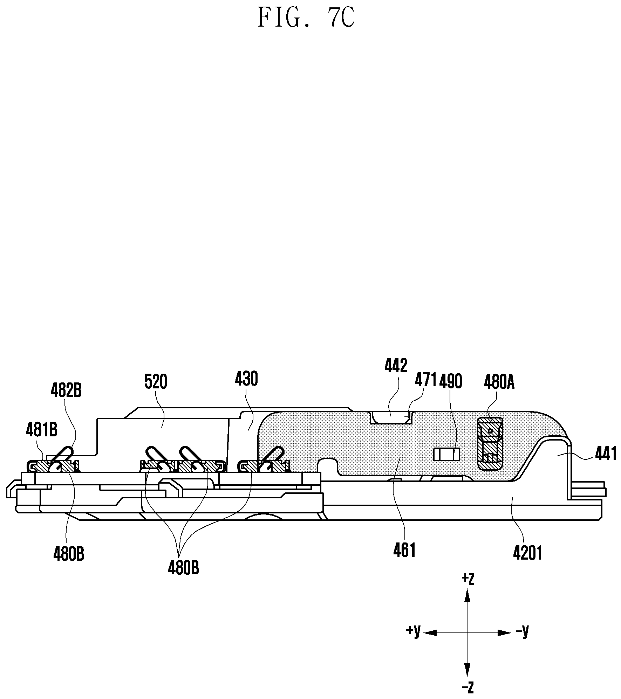

The above-described first support 441, third support 442, and fourth support 443 may fix the first part 461 of the flexible printed circuit board 460, which is seated on the support plate 420, to the support plate 420. In an embodiment, the fifth support 444 may be a portion that substantially protrudes in the first direction with respect to the body 4201 of the support plate 420. The fifth support 444 may support the second part 462 of the flexible printed circuit board 460 seated on the support plate 420 and may fix the flexible printed circuit board 460 to the support plate 420. In an embodiment, the fifth support 444 may be configured in the form of a hook to restrict the movement of the second part 462 of the flexible printed circuit board 460 with respect to the support plate 420 in the Z-axis direction with reference to FIG. 5B. Accordingly, the second part 462 of the flexible printed circuit board 460 may be fixed to the support plate 420 via the fifth support 444. Meanwhile, the fifth support 444 may be a mechanical element configured to couple the support plate 420 to the housing 410. The above-described first support 441, third support 442, fourth support 443, and fifth support 444 are merely examples, and at least one support may be omitted from or added to the support plate 420. In addition, the shapes of the first support 441, the third support 442, the fourth support 443, and the fifth support 444 illustrated in FIG. 5B are merely examples and may be variously modified within a scope that can be devised by a person ordinarily skilled in the art. For example, referring to FIG. 7C, the shape of the first support 441 may be variously modified.

Referring to FIG. 5C, according to an embodiment, the support plate 420 may include a first support 441, a second support 430, a third support 442, and a fifth support 444. In an embodiment, the fourth support 443 may be omitted in the embodiment of FIG. 5C compared to the embodiment of FIG. 5B. In an embodiment, the second support 430 in FIG. 5C may extend in the -Y direction compared to FIG. 5B. The first part 461 of the flexible printed circuit board 460 may be disposed on the second support 430 in a state bent perpendicular to the second portion 462 disposed on the body 4201 of the support plate 420.

Referring to FIG. 5D, according to an embodiment, the support plate 420 may include a second support 430, a third support 442, a fourth support 443, and a fifth support 444. In an embodiment, the first support part 441 may be omitted in the embodiment of FIG. 5D compared to the embodiment of FIG. 5B. In an embodiment, an adhesive member may be disposed on the second support 430 and/or the fourth support 443. The first part 461 of the flexible printed circuit board 460 may be fixed to the second support 430 and/or the fourth support 443 via an adhesive member. Accordingly, the movement of the first part 461 in the X-axis direction in the support plate 420 may be restricted via the adhesive member.

According to an embodiment of the disclosure, the above-described first support part 441, second support part 430, third support part 442, fourth support part 443, and fifth support part 444 are merely examples. at least one support part may be omitted or added to the support plate 420. However, hereinafter, for convenience of explanation, as shown in FIG. 5B, the first support part 441, the second support part 430, the third support part 442, the fourth support part 443, and the fifth support part 444) will be explained on the premise that it includes. The following description can be equally applied to the support plate 420 shown in FIGS. 5C and 5D.

In an embodiment, the first part 461 of the flexible printed circuit board 460 may be supported on the fourth support 443 between the first support 441 and the fourth support 443. The first conductive member 480A may be located in the first part 461 to correspond to the fourth support part 443. In an embodiment, the first conductive member 480A is supported through the fourth support part 443 when the flexible printed circuit board 460 is inserted into the housing 410 while being fixed to the support plate 420. It may be in contact with a portion of the frame 411.

In an embodiment, the first conductive member 480A may be located in the first part 461 to correspond to the second support part 430. In an embodiment, the first conductive member 480A is supported through the second support 430 when the flexible printed circuit board 460 is inserted into the housing 410 while being fixed to the support plate 420. It may be in contact with a portion of the frame 411.

In an embodiment, electronic components may be placed on the support plate 420. For example, the electronic components include camera modules 205 and 212 (e.g., camera module 180 in FIG. 1), speaker module 510 (e.g., sound output module 155 in FIG. 1, and sound output in FIG. 2A). It may be an electronic component such as devices 207 and 214). In an embodiment, a housing of the electronic component surrounding at least a portion of the electronic component may be disposed on the support plate 420. In an embodiment, the second support 430 may be forms one of the surfaces of the housing of the electronic component. In an embodiment, the housing of the electronic component may include at least two surfaces perpendicular to the body 4201 of the support plate 420. In an embodiment, the housing of the electronic component may include four sides perpendicular to the body 4201. In an embodiment, the second support part 430 may be forms one of the surfaces of the the housing of the electronic component.

According to an embodiment, the electronic device 300 may include a speaker module 510 (e.g., the sound output module 155 in FIG. 1 or the sound output device 207 or 214 in FIG. 2A). In an embodiment, referring to FIG. 5B, the speaker module 510 may be seated on the support plate 420. A speaker housing 520 enclosing the speaker module 510 may be disposed on the support plate 420. In an embodiment, the speaker housing 520 may be the the housing of the electronic component. The speaker housing 520 may be disposed on the support plate 420 to enclose at least a portion of the speaker module 510. In an embodiment, speaker housing 520 may include at least two surfaces perpendicular to body 4201. For example, the speaker housing 520 may include four surfacess perpendicular to the body 4201. In an embodiment, the second support 430 may be a portion of the speaker housing 520. For example, the second support 430 may be a portion of the surface of the speaker housing 520. In an embodiment, a portion of the first part 461 of the flexible printed circuit board 460 may be disposed on one surface of the speaker housing 520.

According to an embodiment, as illustrated in FIGS. 6A and 6B, the flexible printed circuit board 460 may be seated on the support plate 420. In an embodiment, referring to FIG. 6A, the first part 461 of the flexible printed circuit board 460 may be inserted into the space between the first support 441 and the fourth support 443 and seated on the second support 430. The first part 461 of the flexible printed circuit board 460 may be located between the first support 441 and the fourth support 443 to be restricted in movement in the x-axis direction with reference to FIG. 6A. In some embodiments, when the electronic device 300 does not include the fourth support 443, the movement of the first part 461 of the flexible printed circuit board 460 in the x-axis direction may be restricted by the first support 441 and the second support 430. In an embodiment, the first part 461 of the flexible printed circuit board 460 may be seated on the second support 430 and supported by the third support 442. The third support 442 may restrict the movement of the first part 461 of the flexible printed circuit board 460 seated on the second support 430 in the Z-axis direction with reference to FIG. 6A. The first part 461 of the flexible printed circuit board 460 may be seated on the second support 430 and may be restricted in movement by the first support 441, the third support 442, and/or the fourth support 443. Accordingly, the first part 461 of the flexible printed circuit board 460 may be fixed to the support plate 420.

According to an embodiment of the disclosure, the flexible printed circuit board 460 may be fixed to the support plate 420 and inserted into the housing 410 so as to be vertically located in the housing 410. In an embodiment, referring to FIG. 7A, the first part 461 of the flexible printed circuit board 460 may be seated on the second support 430. Referring to FIG. 9 to be described later, the second support 430 may be vertically located in the housing 410 in a state in which the support plate 420 is inserted into the housing 410 and may face the inner wall 412 of the frame 411. The first part 461 of the flexible printed circuit board 460 may be seated on the second support 430 disposed on the support plate 420 and may be vertically inserted into the housing 410. Accordingly, since the flexible printed circuit board 460 is vertically located in the housing 410, the space occupied by the flexible printed circuit board 460 in the narrow space of the housing 410 may be reduced. In addition, the first part 461 of the flexible printed circuit board 460 may be fixed to the support plate 420 by the first support 441, the third support 442, and/or the fourth support 443 without an adhesive member. Accordingly, since the first part 461 of the flexible printed circuit board 460 is fixed to the support plate 420 without using an adhesive member, production costs may be reduced due to a decrease in the amount of use of adhesive members.

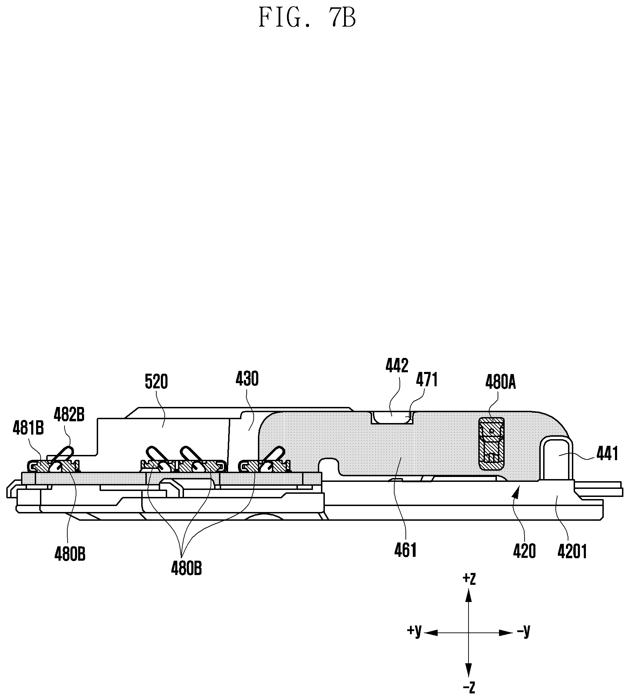

According to an embodiment, as illustrated in FIGS. 6B, 7A and 7B, after the first part 461 of the flexible printed circuit board 460 is seated on the second support 430, the second part 462 and the connection part 463 may be bent with respect to the first part 461. For example, the second part 462 may be bent perpendicular to the first part 461 disposed perpendicular to the support plate 420 and may be seated on the support plate 420. The second part 462 may be fixed to the support plate 420 by an adhesive member (e.g., tape or bond). The second part 462 may be seated on the support plate 420 and the movement thereof may be restricted by the fifth support 444. In an embodiment, referring to FIGS. 5B and 7A, movement of the second part 462 of the Flexible printed circuit board 460 in the Y-axis direction may be restricted by the fifth support 444 with respect to FIG. 6B. Since the fifth support 444 is fabricated in a hook shape, the movement of the second part 462 of the Flexible printed circuit board 460 in the Z-axis direction with respect to the support plate 420 may be restricted. Accordingly, the second part 462 of the flexible printed circuit board 460 may be fixed to the support plate 420. Similarly, the connection part 463 may be bent with respect to the first part 461 to be connected to the printed circuit board 450.

Referring to FIGS. 7A and 7B, according to an embodiment, the flexible printed circuit board 460 may include conductive members 480A and 480B in contact with electrical objects. In an embodiment, the electrical object may be part of the frame 411. In an embodiment, the first conductive member 480A may be disposed in the first part 461 of the flexible printed circuit board 460. The second conductive member 480B may be disposed in the second part 462 of the flexible printed circuit board 460.

According to an embodiment, as illustrated in FIGS. 7A and 7B, the conductive members 480A and 480B may be in contact with the ground disposed in the housing 410 to induce charges accumulated around the flexible printed circuit board 460 to the ground having a relatively low potential. As charges move to the ground, charges may not accumulate around the flexible printed circuit board 460. Therefore, an improvement may be achieved in terms of a communication noise phenomenon caused by accumulated charges.

According to an embodiment, the flexible printed circuit board 460 may include a first conductive member 480A and/or a second conductive member 480B. In an embodiment, the first conductive member 480A may be disposed in the first part 461 of the flexible printed circuit board 460. The second conductive member 480B may be disposed in the second part 462 of the flexible printed circuit board 460. In an embodiment, the first conductive member 480A may be in contact with and electrically connected to the first electrical object located in the second direction. The second conductive member 480B may be electrically connected to a second electrical object located in the first direction. In an embodiment, the first electrical object and the second electrical object may be part of the frame 411. For example, the first conductive member 480A contacts a portion of the inner wall portion 412 of the frame 411 while the flexible printed circuit board 460 is fixed to the support plate 420 and inserted into the housing 410. In addition, the second conductive member 480B may be in contact with a portion of the inner wall portion 412 of the frame 411 while the flexible printed circuit board 460 is fixed to the support plate 420 and inserted into the housing 410.

According to an embodiment, one of the first conductive member 480A and the second conductive member 480B may electrically connect the frame 411 and the printed circuit board 450. For example, the RF signal generated from the communication module 180 of the printed circuit board 450 may be transmitted to the frame 411 through any one of the first conductive member 480A and the second conductive member 480B. In an embodiment, the other one of the first conductive member 480A and the second conductive member 480B may be a ground that grounds the electrical signal applied to the frame 411. For example, the first conductive member 480A is a ground element that grounds the electrical signal applied to the frame 411, and the second conductive member 480B electrically connects the printed circuit board 450 and the frame 411. It may be a connecting configuration. In this case, the RF signal generated from the communication module 180 of the printed circuit board 450 may be transmitted to the frame 411 through the flexible printed circuit board 460 - first conductive member 480A. Conversely, for example, the second conductive member 480B is a ground element that grounds the electrical signal applied to the frame 411, and the first conductive member 480A electrically connects the printed circuit board 450 and the frame.

In an embodiment, the first conductive member 480A may include a first seating portion 481A and a first contact portion 482A. The first seating portion 481A may be disposed in the first part 461 of the flexible printed circuit board 460. The first contact portion 482A may protrude from the first seating portion 481A and come into contact with the first electrical object. In an embodiment, the first electrical object may be part of the frame 411. In an embodiment, the first seating portion 481A of the first conductive member 480A may be the body of the first conductive member 480A. The first seating portion 481A may be seated on the flexible printed circuit board 460 and directly connected to the flexible printed circuit board 460. In an embodiment, the first contact portion 482A may be a clip that contacts the frame 411. For example, the first contact portion 482A may have elasticity that is compressed as it comes into contact with the frame 411. In addition, the first contact portion 482A may be formed in various shapes and come into contact with the frame 411.

In an embodiment, the second conductive member 480B may include a second seating portion 481B and a second contact portion 482B. The second seating portion 481B may be disposed in the second part 462 of the flexible printed circuit board 460. The second contact portion 482B may protrude from the second seating portion 481B and come into contact with the second electrical object. In an embodiment, the second electrical object may be part of the frame 411. In an embodiment, the second seating portion 481B of the second conductive member 480B may be the body of the second conductive member 480B. The second seating portion 481B may be seated on the flexible printed circuit board 460 and directly connected to the flexible printed circuit board 460. In an embodiment, the second contact portion 482B may be a clip that contacts the frame 411. For example, the second contact portion 482B may have elasticity that is compressed as it comes into contact with the frame 411. In addition, the second contact portion 482B may be formed in various shapes and come into contact with the frame 411.

In an embodiment, referring to FIG. 7A, the first conductive member 480A may be disposed on the first part 461 of the flexible printed circuit board 460 and located on the support plate 420 in parallel with the first support 441. The first support 441 may protrude further than the first seating portion 481A of the conductive members 480A and 480B in the -x direction (e.g., the second direction) with reference to FIG. 7A. In some embodiments, the first conductive member 480A may be located on the support plate 420 in parallel to the third support 442. The third support 442 may protrude further than the first seating portion 481A of the first conductive member 480A in the -x direction (e.g., the second direction) with reference to FIG. 7A. According to an embodiment of the disclosure, the first conductive member 480A is disposed on the the first part 461 of the flexible printed circuit board 460 and may be located parallel to the first support 441 and/or the third support 442. At least one of the first support 441 and the third support 442 may protrude further than the first seating portion 481A of the first conductive member 480A. For example, at least one of the first support 441 and the third support 442 may protrude further than the first seating portion 481A of the first conductive member 480A in the -x direction with reference to FIG. 7A. In this case, when the support plate 420 to which the flexible printed circuit board 460 is assembled is inserted into the housing 410, it is possible to prevent collision between the first seating portion 481A of the first conductive member 480A and a structure of the housing 410. Accordingly, the first seating portions 481A of the first conductive member 480A may be prevented from being damaged due to collision with the housing 410 by the first support 441 and/or the third support 442. In addition, in a state in which the support plate 420 is seated on the housing 410, the first contact portions 482A of the first conductive member 480A may come into contact with the ground of the housing 410.

In an embodiment, referring to FIG. 7C, a dummy member 490 may be disposed on the first part 461 of the flexible printed circuit board 460 disposed on the second support 430. The dummy member 490 may protrude from the first part 461 of the flexible printed circuit board 460 in the second direction. In an embodiment, the dummy member 490 may be configured integrally with the first part 461 of the flexible printed circuit board 460. The dummy member 490 may protrude further than the first seating portion 481A of the first conductive member 480A disposed on the first part 461 of the flexible printed circuit board 460 in the x-direction (e.g., the second direction) with reference to FIG. 7A. In this case, when the support plate 420 to which the flexible printed circuit board 460 is assembled is inserted into the housing 410, it is possible to prevent collision between the first seating portion 481A of the first conductive member 480A and a structure of the housing 410. Accordingly, the dummy member 490 is capable of preventing the first seating portion 481A of the first conductive member 480A from being damaged due to collision with the housing 410. In addition, in a state in which the support plate 420 is seated on the housing 410, the first contact portions 482A of the first conductive member 480A may come into contact with the ground of the housing 410.

In an embodiment, referring to FIGS. 7A, 7B, and 7C, the first part 461 of the flexible printed circuit board 460 may include a first seating groove 471 in which the third support 442 is located. The third support 442 may be disposed in the first seating groove 471 of the first part 461 and may fix the first part 461 of the flexible printed circuit board 460 to the support plate 420 such that the first part 461 does not move in the y-axis direction with reference to FIG. 7B. In an embodiment, the second part 462 of the flexible printed circuit board 460 may include a second seating groove 472 where the fifth support 444 is located. The fifth support 444 may be disposed in the second seating groove 472 of the second part 462 and may fix the second part 462 of the flexible printed circuit board 460 to the support plate 420 such that the second part 462 does not move in the z-axis direction with reference to FIG. 7A.

In an embodiment, referring to FIGS. 5B and 7A, the support plate 420 may include a first protrusion 421 and a second protrusion 422 substantially protruding in the first direction (e.g., the z-axis direction with reference to FIG. 5B). In an embodiment, referring to FIGS. 5A and 7A, the flexible printed circuit board 460 may include a first hole 464 and a second hole 465. For example, the second part 462 of the flexible printed circuit board 460 may include the first hole 464 and the second hole 465. The flexible printed circuit board 460 may be seated on the support plate 420 such that the first protrusion 421 and the second protrusion 422 are inserted into the first hole 464 and the second hole 465, respectively. Accordingly, the second part 462 of the Flexible printed circuit board 460 may be fixed to the support plate 420 by the first protrusion 421 and the second protrusion 422.

In an embodiment not illustrated in the drawings, the first protrusion 421 and the second protrusion 422 may be provided on the second support 430 or the fourth support 443 to protrude in the second direction. In this case, the first hole 464 and the second hole 465 may be provided in the first part 461 of the flexible printed circuit board 460. The first part 461 of the flexible printed circuit board 460 may be seated on the second support 430 or the fourth support 443 such that the first protrusion 421 and the second protrusion 422 are inserted into the first hole 464 and the second hole 465, respectively. Accordingly, the first part 461 of the flexible printed circuit board 460 may be fixed to the second support 430 or the fourth support 443 by the first protrusion 421 and the second protrusion 422 so that the position of the first part 461 in the z-axis direction can be fixed with respect to the support plate 420.

According to an embodiment, FIG. 8A is a cross-sectional view of the support plate 420 of FIG. 7A taken along line A-A. Referring to FIG. 8A, the third support 442 may protrude from the second support 430. Referring to FIG. 8A, the first part 461 of the flexible printed circuit board 460 may be supported in the z-axis direction by the third support 442. The first part 461 of the flexible printed circuit board 460 may be disposed on the second support 430 and located between the support plate 420 and the third support 442. Accordingly, the movement of the first part 461 of the flexible printed circuit board 460 may be restricted in the z-axis direction.

According to an embodiment, FIGS. 8B and 8C are cross-sectional views of the support plate 420 taken along lines B-B and C-C, respectively. Referring to FIGS. 8B and 8C, the first support 441 and the fourth support 443 may protrude from the support plate 420 in the +z direction in FIGS. 8B and 8C. Referring to FIGS. 7A, 8B, and 8C, the first support 441 and the fourth support 443 may be disposed to face each other in an extension direction (e.g., the y-axis direction in FIG. 7A). For example, the first support 441 and the fourth support 443 may face each other in the extension direction and may be located to cross each other. The first part 461 of the flexible printed circuit board 460 may be disposed between the first support 441 and the fourth support 443. Referring to FIGS. 8B and 8C, one surface of the flexible printed circuit board 460 may be supported by the first support 441, and the other surface opposite to the one surface may be supported by the fourth support 443. Since the first support 441 and the fourth support 443 are disposed to cross each other with respect to the first part 461 of the flexible printed circuit board 460, the movement of the first part 461 of the flexible printed circuit board 460 may be restricted in the x-axis direction with reference to FIG. 8B.

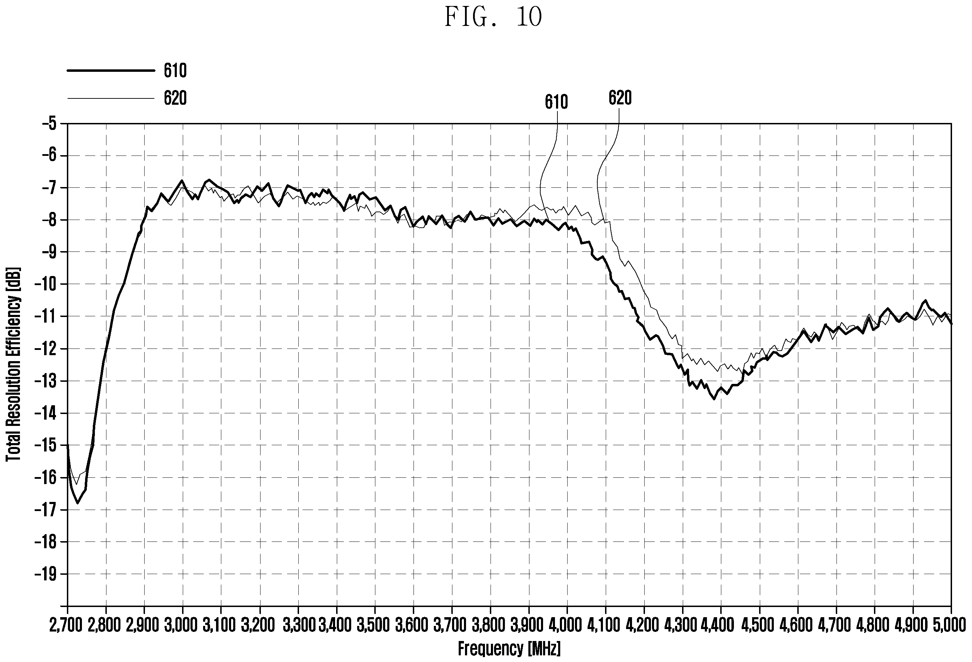

FIG. 9 is a view illustrating a state in which a support plate of FIG. 7A is assembled to a housing according to an embodiment of the disclosure. FIG. 10 is a view for explaining antenna performance of an antenna structure according to an embodiment of the disclosure.

According to an embodiment, referring to FIG. 9, the support plate 420 to which the flexible printed circuit board 460 is fixed may be disposed in the housing 410. The support plate 420 may be disposed in the housing 410 such that the first part 461 of the flexible printed circuit board 460 is vertically located in the housing 410 to face the inner wall 412.

According to an embodiment of the disclosure, the electronic device 300 may transmit a communication signal to an external electronic device or receive a communication signal from an external electronic device through the frame 411 that defines the exterior of the electronic device. Meanwhile, the frame 411 may be electrically connected to the communication module 190 disposed on the printed circuit board 450 via the flexible printed circuit board 460. The flexible printed circuit board 460 may electrically connect the communication module and the frame 411 by using a minimum space within the limited inner space of the electronic device 300. For example, at least a portion of the flexible printed circuit board 460 may be vertically disposed in the housing 410 to face the inner wall 412 of the frame 411. In an embodiment of the disclosure, the flexible printed circuit board 460 may be fixed to the support plate 420 and inserted into the housing 410 so as to be vertically located in the housing 410. In an embodiment, the first part 461 of the flexible printed circuit board 460 may be seated on the second support 430. The second support 430 may be vertically located in the housing 410 in a state in which the support plate 420 is inserted into the housing 410 and may face the inner wall 412 of the frame 411. The first part 461 of the flexible printed circuit board 460 may be seated on the second support30 disposed on the support plate 420 and may be vertically inserted into the housing 410. Accordingly, since the flexible printed circuit board 460 is vertically located in the housing 410, the space occupied by the flexible printed circuit board 460 in the narrow space of the housing 410 may be reduced. Accordingly, other electronic components or devices can be placed in the reduced space.

Meanwhile, the first part 461 of the flexible printed circuit board 460 may be fixed by a support provided on the support plate 420. In an embodiment, the first part 461 of the flexible printed circuit board 460 may be fixed by the first support 441, the third support 442, and the fourth support 443 provided on the support plate 420. For example, referring to FIG. 9, the first support 441 and the fourth support 443 may restrict the movement of the first part 461 in the x-axis direction. In addition, the third support 442 may limit the movement of the first part 461 in the z-axis direction. The first part 461 of the flexible printed circuit board 460 may be fixed to the support plate 420 by the first support 441, the third support 442, and the fourth support 443 without an adhesive member. Accordingly, since the first part 461 of the flexible printed circuit board 460 is fixed to the support plate 420 without using an adhesive member, production costs may be reduced due to a decrease in the amount of use of adhesive members.

Meanwhile, the second part 462 of the flexible printed circuit board 460 may be fixed to the support plate 420 in various ways. For example, the second part 462 of the flexible printed circuit board 460 may be fixed to the body 4201 of the support plate 420 by an adhesive member. In addition, the movement of the second part 462 of the flexible printed circuit board 460 may be restricted by the fifth support 444. Therefore, the flexible printed circuit board 460 may be fixed to the support plate 420 and may not be separated from the support plate 420 while the support plate 420 is being inserted into the housing 410.

According to an embodiment, the graph illustrated in FIG. 10 is a graph comparing the antenna performance obtained when the conductive members 480A and 480B of the flexible printed circuit board 460 are connected to the ground of the housing 410 and the antenna performance obtained when the conductive members 480A and 480B are not connected to the ground. In an embodiment, the frame 411 may be grounded through any one of the first conductive member 480A and the second conductive member 480B. The conductive members 480A and 480B may be in contact with the ground disposed in the housing 410 to induce charges accumulated around the Flexible printed circuit board 460 to the ground having a relatively low potential. As charges move to the ground, charges may not accumulate around the flexible printed circuit board 460. In this case, an improvement may be achieved in terms of a communication noise phenomenon caused by accumulated charges. Therefore, referring to FIG. 10, the antenna performance 620 obtained when the conductive members 480A and 480B and the ground are in contact is improved more than the antenna performance 610 obtained when the conductive members 480A and 480B and the ground are not in contact with each other.

An electronic device 300 according to an embodiment of the disclosure (e.g., the electronic device 101 in FIG. 1 and/or the electronic device 200 in FIG. 2A) may include a housing 410 (e.g., the housing 210 in FIG. 2A), a support plate 420 (e.g., the third support member 360 in FIG. 3) comprising a body 4201, a first support 441 substantially protruding from the body in a first direction, and a second support 430 spaced apart from the first support and substantially protruding from the body in the first direction, the support plate disposed in the housing, and a flexible printed circuit board 460 comprising a first part 461, at least a portion of which is disposed between the first support and the second support, and a second part 462 extending from the first part disposed on the body of the support plate such that the first part is vertically disposed with respect to the second part, wherein at least one first conductive member 480A is disposed at the first part, and at least one second conductive member 480B is disposed at the second part.

In addition, the support plate comprises a third support protruding from the second support in a second direction substantially perpendicular to the first direction and supporting the first part of the flexible printed circuit board.

In addition, a surface of the second support faces a virtual surface extending from a surface of the first support.

In addition, the support plate comprises a fourth support disposed to face the extension surface comprising the first support and protruding substantially in the first direction with respect to the body of the support plate. The at least the portion of a first part of the flexible printed circuit board is located between the first support and the fourth support.

In addition, the first conductive member is located in the first part of the flexible printed circuit board to correspond to the fourth support and is supported through the fourth support.

The electronic device may further include an an electronic component(e.g., the sound output module 155 in FIGS. 5A and 5B, the sound output device 207 or 214 in FIG. 2A and the camera module 180 in FIG. 1) disposed on the support plate, the electronic component including a housing, wherein the second support forms a part of the housing of the electronic component.

In addition, the electronic component is a speaker module. bracket may be a speaker housing 520 surrounding a portion of the speaker module.

In addition, wherein a housing of the speaker module includes at least two surfaces perpendicular to the body of the support plate, and wherein the second support forms one of the surfaces of the housing of the speaker module.

The electronic device may further include a printed circuit board 450 disposed in the housing and comprising a communication module 180 and a frame 411 defining an exterior of a side surface of the electronic device, the frame including a conductive material. The first conductive member and the second conductive member are in contact with the frame. The flexible printed circuit board electrically connects with the printed circuit board, the first conductive member, and the second conductive member.

In addition, the flexible printed circuit board includes a connection part 463 extending from the first part such that the connection part is vertically disposed with respect to the first part and electrically connected to the printed circuit board.

In addition, the second conductive member is in contact with a portion of the frame in the first direction, and the first conductive member is in contact with another portion of the frame in a second direction substantially vertical to the first direction.

In addition, the flexible printed circuit board electrically connects the communication module with the frame through one of the first conductive member or the second conductive member, and the other one of the first conductive member and the second conductive member electrically connects the frame with a ground of the electronic device.

In addition, the first part of the flexible printed circuit board comprises a first seating groove 471 in which the third support is located.

In addition, the first conductive member comprises a first seating portion(481A) disposed on the first part of the flexible printed circuit board and a first contact portion(482A) protruding from the first seating portion to come into contact with a first electronic component disposed in the housing, and the second conductive member comprises a second seating portion(481B) disposed on the second part of the flexible printed circuit board and a second contact portion(482B) protruding from the second seating portion to come into contact with a second electronic component disposed in the housing.

In addition, the first support protrudes in a second direction further than the first seating portion of the first conductive member.

The electronic device may further include a dummy member 490 disposed in the first part of the flexible printed circuit board and substantially protruding in a second direction further than the first seating portion of the first conductive member.

In addition, the support plate comprises a fifth support 444 substantially protruding in the first direction from the body of the support plate to support the second part of the flexible printed circuit board. The second part of the flexible printed circuit board includes a second seating groove 472 in which the fifth support is located.

In addition, the support plate comprises a first protrusion 421 and a second protrusion 422 substantially protruding in the first direction. The second part of the flexible printed circuit board comprises a first hole 464 through which the first protrusion passes and a second hole 465 through which the second protrusion passes.

In addition, a movement of the first part of the flexible printed circuit board in a second direction perpendicular to the first direction is restricted through the first support and the second support.

In addition, a movement of the first part of the flexible printed circuit board in the second direction is restricted through the third support.

## Claims

1. An electronic device (101, 200, 300) comprising:
a housing (210, 410);
a support plate (360, 420) disposed in the housing and comprising a body (4201), a first support (441) substantially protruding from the body in a first direction, and a second support (430) spaced apart from the first support and substantially protruding from the body in the first direction, wherein the first direction is a direction perpendicular to the body of the support plate;
a flexible printed circuit board (460) comprising:
a first part (461), at least a portion of which is disposed between the first support and the second support, and
a second part (462) extending from the first part disposed on the body of the support plate such that the first part is perpendicularly disposed with respect to the second part;
wherein at least one first conductive member (480A) is disposed at the first part, and at least one second conductive member (480B) is disposed at the second part,
**characterized in that** the support plate comprises a third support (442) protruding from the second support in a second direction substantially perpendicular to the first direction and supporting the first part of the flexible printed circuit board.

2. The electronic device of claim 1, wherein the support plate comprises a fourth support (443) disposed to face the extension surface comprising the first support and protruding substantially in the first direction with respect to the body of the support plate,
wherein the at least a portion of the first part of the flexible printed circuit board is located between the first support and the fourth support.

3. The electronic device of claim 2, wherein the first conductive member is located in the first part of the flexible printed circuit board to correspond to the fourth support and is supported by the fourth support.

4. The electronic device of claim 1, further comprising:
an electronic component disposed on the support plate, the electronic component including a housing; and
wherein the second support forms a part of the housing of the electronic component.

5. The electronic device of claim 4, wherein the electronic component is a speaker module (155, 207, 214, 510),
wherein a housing of the electronic component includes at least two surfaces perpendicular to the body of the support plate, and
wherein the second support forms one of the surfaces of the housing of the electronic component.

6. The electronic device of claim 1, further comprising:
a printed circuit board (340, 450) disposed in the housing and comprising a communication module (190); and
a frame (218, 310, 411) defining an exterior of a side surface of the electronic device, the frame including a conductive material,
wherein the first conductive member and the second conductive member are in contact with the frame, and
wherein the flexible printed circuit board electrically connects with the printed circuit board, the first conductive member, and the second conductive member.

7. The electronic device of claim 6, wherein the flexible printed circuit board includes a connection part 463 extending from the first part such that the connection part is vertically disposed with respect to the first part and electrically connected to the printed circuit board.

8. The electronic device of claim 6, wherein the second conductive member is in contact with a portion of the frame in the first direction, and
the first conductive member is in contact with another portion of the frame in a second direction substantially vertical to the first direction.

9. The electronic device of claim 8, wherein the flexible printed circuit board electrically connects the communication module with the frame through one of the first conductive member or the second conductive member, and the other one of the first conductive member and the second conductive member grounds the electrical signal transmitted to the frame.

10. The electronic device of claim 1, wherein the first part of the flexible printed circuit board comprises a first seating groove (471) in which the third support is located.

11. The electronic device of claim 1, wherein the first conductive member comprises a first seating portion (481A) disposed on the first part of the flexible printed circuit board and a first contact portion (482A) protruding from the first seating portion to come into contact with a first electric component disposed in the housing, and
wherein the second conductive member comprises a second seating portion (481B) disposed on the second part of the flexible printed circuit board and a second contact portion (482B) protruding from the second seating portion to come into contact with a second electronic component disposed in the housing.

12. The electronic device of claim 11, wherein the first support protrudes in a second direction further than the first seating portion of the first conductive member.

13. The electronic device of claim 11, further comprising a dummy (490) member disposed on the first part of the flexible printed circuit board and protruding in a second direction substantially perpendicular to the first direction than the first seating portion of the first conductive member. Including electronic devices.

14. The electronic device of claim 1, wherein the support plate comprises a fifth support (444) substantially protruding in the first direction from the body of the support plate to support the second part of the flexible printed circuit board,
wherein the second part of the flexible printed circuit board includes a second seating groove (472) in which the fifth support is located.

## Patentansprüche

1. Elektronische Vorrichtung (101, 200, 300), umfassend:
ein Gehäuse (210, 410);
eine Trägerplatte (360, 420), die im Gehäuse angeordnet ist und einen Körper (4201),
einen ersten Träger (441), der im Wesentlichen in einer ersten Richtung von dem Körper vorsteht, und einen zweiten Träger (430) umfasst, die von dem ersten Träger beabstandet ist und im Wesentlichen in der ersten Richtung von dem Körper vorsteht,
wobei die erste Richtung eine Richtung senkrecht zum Körper der Trägerplatte ist;
eine flexible Leiterplatte (460), umfassend:
einen erster Teil (461), von dem zumindest ein Abschnitt zwischen dem ersten Träger und dem zweiten Träger angeordnet ist, und
einen zweiten Teil (462), der sich von dem ersten Abschnitt erstreckt und so am Körper der Trägerplatte angeordnet ist, dass der erste Teil senkrecht in Bezug auf den zweiten Teil angeordnet ist;
wobei mindestens ein erstes leitfähiges Element (480A) am ersten Teil angeordnet ist, und
mindestens ein zweites leitfähiges Element (480B) am zweiten Teil angeordnet ist,
**dadurch gekennzeichnet, dass** die Trägerplatte einen dritten Träger (442) umfasst, der von dem zweiten Träger in einer zweiten Richtung, die im Wesentlichen senkrecht zur ersten Richtung ist, vorsteht und den ersten Teil der flexiblen Leiterplatte trägt.

2. Elektronische Vorrichtung nach Anspruch 1, wobei die Trägerplatte einen vierten Träger (443) umfasst, der so angeordnet ist, dass er der Verlängerungsfläche, die den ersten Träger umfasst, zugewandt ist, und der im Wesentlichen in der ersten Richtung in Bezug auf den Körper der Trägerplatte vorsteht,
wobei sich zumindest ein Abschnitt des ersten Teils der flexiblen Leiterplatte zwischen dem ersten Träger und dem vierten Träger befindet.

3. Elektronische Vorrichtung nach Anspruch 2, wobei sich das erste leitfähige Element in dem ersten Teil der flexiblen Leiterplatte befindet, um dem vierten Träger zu entsprechen, und durch den vierten Träger getragen wird.

4. Elektronische Vorrichtung nach Anspruch 1, ferner umfassend:
eine auf der Trägerplatte angeordnete elektronische Komponente, wobei die elektronische Komponente ein Gehäuse beinhaltet; und
wobei der zweite Träger einen Teil des Gehäuses der elektronischen Komponente bildet.

5. Elektronische Vorrichtung nach Anspruch 4, wobei es sich bei der elektronischen Komponente um ein Lautsprechermodul (155, 207, 214, 510) handelt,
wobei ein Gehäuse der elektronischen Komponente mindestens zwei Flächen beinhaltet, die senkrecht zum Körper der Trägerplatte sind, und
wobei der zweite Träger eine der Flächen des Gehäuses der elektronischen Komponente bildet.

6. Elektronische Vorrichtung nach Anspruch 1, ferner umfassend:
eine im Gehäuse angeordnete Leiterplatte (340, 450), die ein Kommunikationsmodul (190) umfasst; und
einen Rahmen (218, 310, 411), der eine Außenseite einer Seitenfläche der elektronischen Vorrichtung definiert, wobei der Rahmen ein leitfähiges Material beinhaltet,
wobei das erste leitfähige Element und das zweite leitfähige Element mit dem Rahmen in Kontakt sind, und
wobei die flexible Leiterplatte elektrisch mit der Leiterplatte, dem ersten leitfähigen Element und dem zweiten leitfähigen Element verbunden ist.

7. Elektronische Vorrichtung nach Anspruch 6, wobei die flexible Leiterplatte einen Verbindungsteil 463 beinhaltet, der sich vom ersten Teil so erstreckt wird, dass der Verbindungsteil senkrecht in Bezug auf den ersten Teil angeordnet ist und elektrisch mit der Leiterplatte verbunden ist.

8. Elektronische Vorrichtung nach Anspruch 6, wobei das zweite leitfähige Element in der ersten Richtung mit einem Abschnitt des Rahmens in Kontakt ist, und
das erste leitfähige Element in einer zweiten Richtung, die im Wesentlichen senkrecht zur ersten Richtung ist, mit einem anderen Abschnitt des Rahmens in Kontakt ist.

9. Elektronische Vorrichtung nach Anspruch 8, wobei die flexible Leiterplatte das Kommunikationsmodul über eines von dem ersten leitfähigen Element oder dem zweiten leitfähigen Element elektrisch mit dem Rahmen verbindet, und
das andere von dem ersten leitfähigen Element und dem zweiten leitfähigen Element das an den Rahmen übertragene elektrische Signal erdet.

10. Elektronische Vorrichtung nach Anspruch 1, wobei der erste Teil der flexiblen Leiterplatte eine erste Aufnahmenut (471) umfasst, in dem sich der dritte Träger befindet.

11. Elektronische Vorrichtung nach Anspruch 1, wobei das erste leitfähige Element einen ersten Aufnahmeabschnitt (481A), der an dem ersten Teil der flexiblen Leiterplatte angeordnet ist, und einen ersten Kontaktabschnitt (482A) umfasst, der von dem ersten Aufnahmeabschnitt vorsteht, um mit einer ersten elektrischen Komponente in Kontakt zu kommen, die im Gehäuse angeordnet ist, und
wobei das zweite leitfähige Element einen zweiten Aufnahmeabschnitt (481B), der an dem zweiten Teil der flexiblen Leiterplatte angeordnet ist, und einen zweiten Kontaktabschnitt (482B) umfasst, der von dem zweiten Aufnahmeabschnitt vorsteht, um mit einer zweiten elektronischen Komponente in Kontakt zu kommen, die im Gehäuse angeordnet ist.

12. Elektronische Vorrichtung nach Anspruch 11, wobei der erste Träger in einer zweiten Richtung weiter vorsteht als der erste Aufnahmeabschnitt des ersten leitfähigen Elements.

13. Elektronische Vorrichtung nach Anspruch 11, ferner umfassend ein Dummy-Element (490), das auf dem ersten Teil der flexiblen Leiterplatte angeordnet ist und in einer zweiten Richtung, die im Wesentlichen senkrecht zur ersten Richtung ist, als der erste Aufnahmeabschnitt des ersten leitfähigen Elements vorsteht. einschließlich elektronischer Vorrichtungen.

14. Elektronische Vorrichtung nach Anspruch 1, wobei die Trägerplatte einen fünften Träger (444) umfasst, der im Wesentlichen in der ersten Richtung von dem Körper der Trägerplatte vorsteht, um den zweiten Teil der flexiblen Leiterplatte zu tragen,
wobei der zweite Teil der flexiblen Leiterplatte eine zweite Aufnahmenut (472) beinhaltet, in der sich der fünfte Träger befindet.

## Revendications

1. Dispositif électronique (101, 200, 300), comprenant :
un boîtier (210, 410) ;
une plaque de support (360, 420) disposée dans le boîtier et comprenant un corps (4201),
un premier support (441) faisant saillie sensiblement à partir du corps dans une première direction, et un deuxième support (430) espacé du premier support et faisant saillie sensiblement à partir du corps dans la première direction, la première direction étant une direction perpendiculaire au corps de la plaque de support ;
une carte de circuit imprimé souple (460) comprenant :
une première partie (461), dont au moins une partie est disposée entre le premier support et le deuxième support, et
une deuxième partie (462) s'étendant à partir de la première partie disposée sur le corps de la plaque de support, de telle sorte que la première partie soit perpendiculaire à la deuxième partie ;
dans lequel au moins un premier élément conducteur (480A) est disposé au niveau de la première partie, et
au moins un deuxième élément conducteur (480B) est disposé au niveau de la deuxième partie,
**caractérisé en ce que** la plaque de support comprend un troisième support (442) faisant saillie à partir du deuxième support dans une deuxième direction sensiblement perpendiculaire à la première direction et supportant la première partie de la carte de circuit imprimé souple.

2. Dispositif électronique selon la revendication 1, dans lequel la plaque de support comprend un quatrième support (443) disposé de manière à faire face à la surface d'extension comprenant le premier support et faisant saillie sensiblement dans la première direction par rapport au corps de la plaque de support,
dans lequel l'au moins une partie de la première partie de la carte de circuit imprimé souple est située entre le premier support et le quatrième support.

3. Dispositif électronique selon la revendication 2, dans lequel le premier élément conducteur est situé dans la première partie de la carte de circuit imprimé souple, de manière à correspondre au quatrième support, et est supporté par le quatrième support.

4. Dispositif électronique de la revendication 1, comprenant en outre :
un composant électronique disposé sur la plaque de support, le composant électronique comprenant un boîtier ; et
dans lequel le deuxième support forme une partie du boîtier du composant électronique.

5. Dispositif électronique selon la revendication 4, dans lequel le composant électronique est un module de haut-parleur (155, 207, 214, 510),
dans lequel un boîtier du composant électronique comporte au moins deux surfaces perpendiculaires au corps de la plaque de support, et
dans lequel le deuxième support forme l'une des surfaces du boîtier du composant électronique.

6. Dispositif électronique de la revendication 1, comprenant en outre :
une carte de circuit imprimé (340, 450) disposée dans le boîtier et comprenant un module de communication (190) ; et
un cadre (218, 310, 411) définissant un extérieur d'une surface latérale du dispositif électronique, le cadre comprenant un matériau conducteur,
dans lequel le premier élément conducteur et le deuxième élément conducteur sont en contact avec le cadre, et
dans lequel la carte de circuit imprimé souple établit une connexion électrique avec la carte de circuit imprimé, le premier élément conducteur et le deuxième élément conducteur.

7. Dispositif électronique selon la revendication 6, dans lequel la carte de circuit imprimé souple comprend une partie de connexion 463 s'étendant à partir de la première partie, de telle sorte que la partie de connexion soit disposée verticalement par rapport à la première partie et soit reliée électriquement à la carte de circuit imprimé.

8. Dispositif électronique selon la revendication 6, dans lequel le deuxième élément conducteur est en contact avec une partie du cadre dans la première direction, et
le premier élément conducteur est en contact avec une autre partie du cadre dans une deuxième direction sensiblement perpendiculaire à la première direction.

9. Dispositif électronique selon la revendication 8, dans lequel la carte de circuit imprimé souple relie électriquement le module de communication au cadre par l'intermédiaire d'un du premier élément conducteur ou du deuxième élément conducteur, et
l'autre du premier élément conducteur ou du deuxième élément conducteur met à terre le signal électrique transmis au cadre.

10. Dispositif électronique selon la revendication 1, dans lequel la première partie de la carte de circuit imprimé souple comprend une première rainure d'assise (471) dans laquelle est logé le troisième support.

11. Dispositif électronique selon la revendication 1, dans lequel le premier élément conducteur comprend une première partie d'assise (481A) disposée sur la première partie de la carte de circuit imprimé souple et une première partie de contact (482A) faisant saillie à partir de la première partie d'assise pour entrer en contact avec un premier composant électrique disposé dans le boîtier, et
dans lequel le deuxième élément conducteur comprend une deuxième partie d'assise (481B) disposée sur la deuxième partie de la carte de circuit imprimé souple et une deuxième partie de contact (482B) faisant saillie à partir de la deuxième partie d'assise pour entrer en contact avec un deuxième composant électronique disposé dans le boîtier.

12. Dispositif électronique selon la revendication 11, dans lequel le premier support fait saillie dans une deuxième direction plus loin que la première partie d'assise du premier élément conducteur.

13. Dispositif électronique selon la revendication 11, comprenant en outre un élément factice (490) disposé sur la première partie de la carte de circuit imprimé souple et faisant saillie dans une deuxième direction sensiblement perpendiculaire à la première direction par rapport à la première partie d'assise du premier élément conducteur. Comprenant des dispositifs électroniques.

14. Dispositif électronique selon la revendication 1, dans lequel la plaque de support comprend un cinquième support (444) faisant saillie sensiblement dans la première direction à partir du corps de la plaque de support afin de supporter la deuxième partie de la carte de circuit imprimé souple,
dans lequel la deuxième partie de la carte de circuit imprimé souple comporte une deuxième rainure d'assise (472) dans laquelle est situé le cinquième support.
